Europäisches Patentamt

(19) European Patent Office

Office européen des brevets

(11) Numéro de publication: **0 170 596**
**A1**

(12) # DEMANDE DE BREVET EUROPEEN

(21) Numéro de dépôt: **85420111.8**

(51) Int. Cl.⁴: **B 29 C 33/28**

(22) Date de dépôt: **20.06.85**

(30) Priorité: **22.06.84 FR 8410090**

(43) Date de publication de la demande:
**05.02.86 Bulletin 86/6**

(84) Etats contractants désignés:
**BE DE FR GB IT LU NL**

(71) Demandeur: **INOPLAST, Société Anonyme:**
**Z.I. de Saint Désirat Champagne**
**F-07340 Serrières(FR)**

(72) Inventeur: **Diaz, Michel**
**Les Pillettes Rue Ernest Boucher**
**F-26600 Tain L'Hermitage(FR)**

(74) Mandataire: **Monnier, Guy et al,**
**Cabinet Monnier 142-150 Cours Lafayette B.P. 3058**
**F-69393 Lyon Cédex 03(FR)**

(54) **Outillage pour la réalisation de pièces en matière synthétique par le procédé de moulage par compression-transfert.**

(57) La retenue mécanique des deux éléments de moulage (1, 3) à la position fermée est opérée, sur chacun de deux côtés opposés de l'outillage, par deux verrous basculants (5) qui sont commandés à l'écartement par un coin mobile (7) de façon à venir se crocheter dans des creusures (1a).

EP 0 170 596 A1

./...

Fig. 2

La présente invention a trait aux presses pour la réalisation de pièces en matière synthétique et elle vise plus particulièrement les outillages spéciaux propres à la mise en oeuvre du procédé de moulage par compression-transfert utilisé en liaison avec les résines thermodurcissables chargées de fibres de verre, en vue de la fabrication de pièces de dimensions importantes, telles notamment que les éléments de carrosserie automobile.

On sait que dans les outillages de ce type, l'empreinte de moulage est formée pour partie dans un élément de moule fixe et pour partie dans un élément opposé solidaire du plateau mobile, comme dans la technique usuelle de compression. Toutefois, à la différence de cette dernière, l'élément fixe du moule est équipé d'un piston de transfert dont la face libre occupe une partie de l'empreinte de moulage et qui est associé à un mécanisme d'actionnement distinct de celui qui assure les déplacements du plateau mobile. C'est sur ce piston de transfert, préalablement amené en position rétractée, qu'est déposée la matière à mouler lors de l'ouverture du moule ; une fois celui-ci refermé, le piston est repoussé à force afin d'assurer le remplissage complet de l'empreinte de moulage.

Compte tenu de l'effort à mettre en oeuvre pour opérer le déplacement du piston de transfert sur une course très réduite, on a habituellement recours à un mécanisme d'actionnement comprenant une cale pentée actionnée alternativement par un vérin hydraulique ou système analogue, la face oblique de ladite cale prenant appui contre la base d'un poussoir convenablement relié au piston précité, afin que ce dernier soit repoussé axialement lorsque la cale est déplacée parallèlement à son axe.

En fait la force à développer est extrêmement élevée et l'on fait ordinairement appel à des presses de très grande puissance, dans lesquelles l'organe mobile est susceptible de développer sur le plateau mobile un effort suffisant pour résister aux sollicitations verticales exercées par le

2       **0170596**

piston de transfert. Or il va de soi que de telles presses sont coûteuses en elles-mêmes, impliquent un prix de maintenance important et nécessitent le plus souvent une main d'oeuvre spécialisée.

C'est à cet inconvénient qu'entend principalement remédier l'invention, en vue de permettre le moulage à chaud de pièces de grandes dimensions en résines thermodurcissables chargées de fibres de verre, et ce à l'aide d'un outillage à faible force de fermeture mais doté d'un dispositif de verrouillage particulièrement efficace, lequel outillage fait alors fonction de porte-moule assurant la présentation des deux éléments (poinçon et matrice) et leur retenue mécanique à la position fermée de moulage.

Le dispositif de verrouillage suivant l'invention est caractérisé en ce qu'il comprend, sur chacun de deux côtés opposés des éléments de conformation, un coin mobile dont une extrémité est associée à un organe de manoeuvre à déplacement alternatif et dont l'extrémité opposée ou tête est profilée de façon à commander deux verrous basculants portés par l'un des éléments et propres, moyennant écartement, à venir se crocheter contre des portées prévues sur l'autre élément.

Le dessin annexé, donné à titre d'exemple, permettra de mieux comprendre l'invention, les caractéristiques qu'elle présente et les avantages qu'elle est susceptible de procurer :

Fig. 1 est une vue de côté montrant, avec arrachement, l'agencement général d'un outillage de moulage par compression-transfert équipé d'un dispositif de verrouillage suivant l'invention.

Fig. 2 reproduit fig. 1 à la position d'ouverture du dispositif.

Le moule de conformation de l'outillage représenté comprend un élément fixe 1 qui à la façon usuelle prend appui, par l'intermédiaire de colonnes non représentées, contre le plateau inférieur fixe 2 de l'outillage. A cet élément fixe 1 est associé un élément mobile 3 qui est solidaire d'un plateau 4 animé du mouvement classique d'ouverture et de fermeture par un mécanisme d'actionnement de tout type approprié.

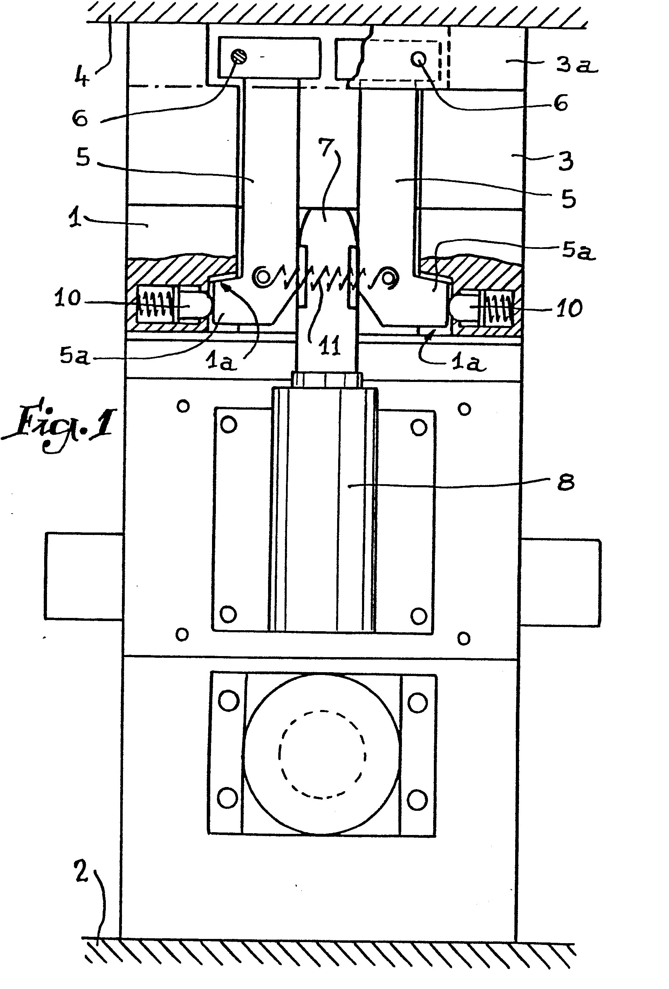

Le verrouillage des deux éléments 1 et 3 à la position de fermeture est assuré par deux paires de verrous 5 dont l'extrémité supérieure est montée à basculement sur des axes 6 portés par l'élément mobile 3 et par un bandeau 3a fixé sur celui-ci. Entre les verrous 5 de chaque paire est engagé un coin mobile 7 commandé verticalement en va-et-vient par un vérin 8 ; ce coin 7 est profilé afin qu'à la position haute illustrée en fig. 1, il tende à écarter les deux verrous 5 et à obliger la base 5a à profil en équerre de ceux-ci à venir se crocheter contre des portées constituées par la face supérieure de creusures 1a ménagées dans les parois latérales de l'élément fixe 1 du moule.

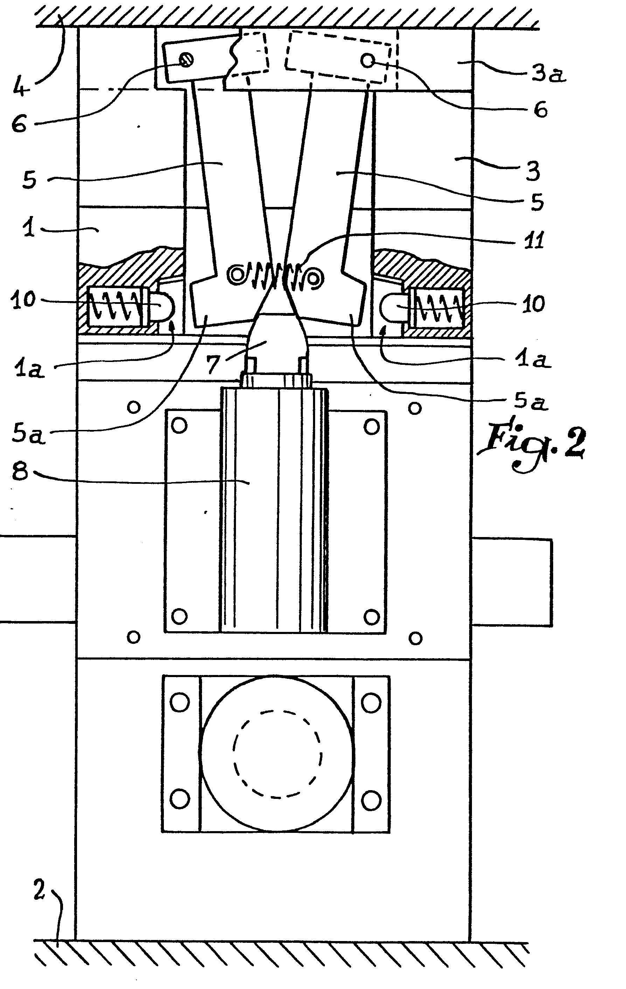

Les deux éléments 1 et 3 sont alors fermement verrouillés l'un à l'autre. Pour le déverrouillage en vue du démoulage, les deux vérins 8 sont commandés à la contraction, ce qui a pour effet d'amener leur coin 7 à la position basse illustrée en fig. 2. Par suite d'une échancrure oblique prévue latéralement à leur partie inférieure, les verrous 5 de chaque paire sont libres de basculer sous l'effet de poussoirs à ressort 10 logés au fond des creusures 1a, de telle sorte que leur base 5a n'est plus retenue à l'intérieur de celles-ci. Les verrous sont maintenus à cette position par un ressort 11, si bien que les éléments 1 et 3 se trouvent alors dissociés et que le plateau 4 peut s'élever avec l'élément mobile 3 pour le démoulage.

On conçoit qu'en dépit de sa simplicité le dispositif de verrouillage assure la retenue efficace des deux éléments du moule, quel que soit l'effort de compression exercé par le piston de transfert.

Revendications

1. Dispositif pour le verrouillage des deux éléments de conformation d'un outillage de moulage par compression-transfert, caractérisé en ce qu'il comprend, sur chacun de deux côtés opposés des éléments (1, 3) à verrouiller, un coin mobile (7) dont une extrémité est associée à un organe de manoeuvre (8) à déplacement alternatif et dont l'extrémité opposée ou tête est profilée de façon à commander deux verrous basculants (5) portés par l'un des éléments et propres, moyennant écartement, à venir se crocheter contre des portées (1a) prévues sur l'autre élément.

2. Dispositif suivant la revendication 1, caractérisé en ce que les portées de verrouillage sont constituées par la face supérieure de creusures (1a) ménagées dans l'élément (1) considéré.

3. Dispositif suivant la revendication 1, caractérisé en ce que les deux crochets (5) montés sur un même côté des éléments (1, 3) à verrouiller sont reliés l'un à l'autre par des moyens élastiques (11) qui les maintiennent élastiquement à la position déverrouillée.

4. Dispositif suivant la revendication 2, caractérisé en ce qu'au fond de chaque creusure (1a) est monté un poussoir élastique (10) qui tend à chasser le verrou (5) correspondant hors de ladite ouverture dès que le coin mobile (7) a libéré les deux verrous qui lui sont associés.

Fig.1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | MODERN PLASTIC INTERNATIONAL, vol. 10, no. 6, juin 1980, page 12, Lausanne, CH; "Engineering & processing news"; "A step toward economical clampless injection machines"<br>* En entier * | 1-3 | B 29 C   33/28 |
| A | DE-B-1 250 625 (VERWALTUNGSGESELLSCHAFT MOELLER U. NEUMANN O.H.G.)<br>* Colonne 4, ligne 6 - colonne 5, ligne 18; figures 3,4 * | 1-4 | |
| A | DE-B-1 253 903 (VERWALTUNGSGESELLSCHAFT MOELLER U. NEUMANN O.H.G.)<br>* Colonne 1, ligne 42 - colonne 2, ligne 31; figure * | 1-4 | DOMAINES TECHNIQUES RECHERCHES (Int. Cl.4) |
| A | US-A-1 916 495  (L.E. SHAW)<br>* Figures 1,3 * | 1-4 | B 29 C |
| A | DE-A-2 143 132  (MASCHINENFABRIK HENNECKE GmbH)<br>* Revendication 1; figures * | 1-4 | |

Le présent rapport de recherche a été établi pour toutes les revendications

| Lieu de la recherche | Date d'achèvement de la recherche | Examinateur |
|---|---|---|
| LA HAYE | 11-10-1985 | SZAMOCKI G.J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82